# EUROPÄISCHE PATENTSCHRIFT

(11) **EP 3 510 305 B1**
(45) Veröffentlichungstag und Bekanntmachung des Hinweises auf die Patenterteilung: **11.05.2022**
(21) Anmeldenummer: 17735512.0
(22) Anmeldetag: 05.07.2017
(51) Int. Cl.: F16J 9/02, F16J 9/06

(54) **ZWEITEILIGER ÖLABSTREIFRING MIT AXIALER STABILISIERUNG UND TWISTAUSGLEICH**
TWO-PART OIL CONTROL RING HAVING AXIAL STABILIZATION AND TWIST COMPENSATION
SEGMENT RACLEUR EN DEUX PARTIES À STABILISATION AXIALE ET À COMPENSATION DE TORSION

(30) Priorität: 08.09.2016 DE 102016116807
(43) Veröffentlichungstag der Anmeldung: 17.07.2019
(73) Patentinhaber: Federal-Mogul Burscheid GmbH, 51399 Burscheid (DE)
(72) Erfinder: RUCH, Fabian, 51375 Leverkusen (DE); BÄRENREUTER, Dirk, 51519 Odenthal (DE)
(74) Vertreter: Becker Kurig & Partner Patentanwälte mbB
(86) Internationale Anmeldenummer: PCT/EP2017/066728
(87) Internationale Veröffentlichungsnummer: WO 2018/046161

(56) Entgegenhaltungen:
- WO-A1-2016/078834

## Beschreibung

### Gebiet der Erfindung

Die vorliegende Erfindung betrifft einen zweiteiligen Kolbenring, insbesondere einen zweiteiligen Ölabstreifring.

### Stand der Technik

Während des Motorbetriebs wird Motoröl aus der Ölwanne zur Schmierung an die Zylinderwand gespritzt. Dabei ist zu beachten, dass eine gewisse Ölmenge im System notwendig ist, um die Funktionsfähigkeit des Kolbenring-Systems in Bezug auf Reibung und auf Abdichtung von Gas aus dem Brennraum zu gewährleisten. Diese Ölmenge soll einerseits möglichst klein gehalten werden, ohne andererseits den hydrodynamischen Schmierfilm auf den Kolbenringlaufflächen zu unterbinden. Überschüssiges Öl muss wieder in das Kurbelgehäuse transportiert werden, da dieses Öl sonst in der Brennkammer verdampfen kann und folglich den Ölverbrauch und die Schadstoffemissionen erhöht.

Als Ölabstreifringe - im Folgenden auch als Ölringe bezeichnet - werden typischerweise zwei- oder dreiteilige Systeme verwendet, bei denen die Tangentialkraft, und damit der Druck mit dem die Lauffläche an der Zylinderwand anliegt, aus einer Feder gewonnen werden. Bei zweiteiligen Systemen sind an einem Grundkörper zwei Laufflächenstege angeordnet, auf welche sich die gesamte Tangentialkraft aufteilt. Bei dreiteiligen Systemen werden zwei durch die Feder axial getrennte dünne Rails verwendet, auf welche sich auch hier die Tangentialkraft aufteilt und welche durch die Feder axial an die Nutflanken gedrückt werden. Durch die relativ geringe axiale Höhe der Laufflächenstege bzw. der Rails entsteht eine relativ hohe Flächenpressung und das Öl wird im Abwärtshub in das Kurbelgehäuse transportiert.

Ein ähnlicher zweiteiliger Ölabstreifring ist aus WO 2016/078834 A1 bekannt.

Dem vorliegenden Olabstreifringkonzept liegt die Aufgabe zugrunde, den Ölverbrauch über die Lauffläche klein zu halten und den Ölverbrauch, der über die Kolbenringnut entsteht zusätzlich zu verringern.

### Zusammenfassung der Erfindung

Die Lösung wird erfindungsgemäß erreicht durch einen zweiteiligen Ölabstreifring mit axialer Stabilisierung, umfassend einen Grundkörper mit einem im Wesentlichen L-förmigen Querschnitt, der einen Laufflächenschenkel und einen Ringflankenschenkel aufweist, die zusammen zwei Schenkel des L-förmigen Querschnitts bilden, und ein axiales Stabilisierungselement, das zumindest teilweise an dem Ringflankenschenkel anliegend angeordnet ist, wobei außenliegend auf dem Laufflächenschenkel ein Abstreifsteg angeordnet ist, wobei das Stabilisierungselement in Axialrichtung elastisch ist, und wobei eine axiale Länge des Laufflächenschenkels kleiner als eine axiale Gesamthöhe des zweiteiligen Ölabstreifrings ist und die axiale Länge des Laufflächenschenkels in Umfangrichtung variiert. Gemäß einem weiteren Aspekt der vorliegenden Erfindung kann die axiale Länge des Laufflächenschenkels im Bereich zwischen 15 % und 75 %, bevorzugt zwischen 20 % und 60 %, weiter bevorzugt zwischen 25 % und 45 %, einer axialen Gesamthöhe des zweiteiligen Ölabstreifrings liegen.

Gemäß einem weiteren Aspekt kann die axiale Länge des Laufflächenschenkels in Umfangrichtung variieren.

Gemäß einem weiteren Aspekt kann die radiale Länge des Ringflankenschenkels im Bereich zwischen 20 % und 100 %, bevorzugt zwischen 50 % und 90 %, weiter bevorzugt zwischen 65 % und 85 %, einer radialen Dicke des zweiteiligen Ölabstreifrings liegen.

Gemäß einem weiteren Aspekt kann die radiale Länge des Ringflankenschenkels in Umfangrichtung variieren.

Gemäß einem weiteren Aspekt kann der Abstreifsteg am kurbelgehäuseseitigen Ende des Laufflächenschenkels angeordnet sein.

Gemäß einem weiteren Aspekt kann der Abstreifsteg am brennraumseitigen Ende des Laufflächenschenkels angeordnet sein.

Gemäß einem weiteren Aspekt kann die axiale Position des Abstreifstegs am Laufflächenschenkel in Umfangrichtung variieren.

Gemäß einem weiteren Aspekt kann der Grundkörper im nicht eingebauten Zustand einen Twist aufweisen.

Gemäß einem weiteren Aspekt kann der Twist des Grundkörpers in Umfangsrichtung variieren, wobei bevorzugt der Twist an dem Ringrücken stärker ausgeführt ist als an den Stoßenden.

Gemäß einem weiteren Aspekt kann die radiale Höhe des Abstreifsteges in Umfangrichtung variieren.

Gemäß einem weiteren Aspekt kann das axiale Stabilisierungselement als Mäanderfeder ausgeführt oder als L-förmige oder rechteckige Schlauchfeder ausgeführt sein.

Gemäß einem weiteren Aspekt kann das axiale Stabilisierungselement eine ungespannte Länge aufweisen, die größer ist als eine Länge der Kolbenringnut in der der zweiteilige Ölabstreifring verwendet werden soll.

Gemäß einem weiteren Aspekt kann die Innenkante, an der die Innenfläche des Laufflächenschenkels auf die Innenfläche Ringflankenschenkels trifft, eine Verrundung oder einen Einzug aufweist.

Gemäß einem weiteren Aspekt kann der nicht eingebaute zweiteilige Kolbenring eine axiale Gesamthöhe aufweisen, die größer ist als eine axiale Breite der Kolbenringnut, in der er verwendet werden soll.

Es wird der üblichen Bezeichnungsweise gefolgt, dass sich axial auf die entsprechende Richtung des Kolbens bezieht, also die Richtung der Hin- und Herbewegung desselben, bzw. auf die entsprechende Achse des Kolben-Zylinders. Die Ringachse ist die durch den Mittelpunkt des Ringes in axiale Richtung verlaufende Achse, die im eingebauten Zustand mit der Mittelachse des Kolbens zusammenfällt. Eine radiale Richtung ist entsprechend eine Richtung die, parallel zur Ringebene, rechtwinklig auf die Ringachse zu oder rechtwinklig von dieser weg verläuft. Als axialer Schnitt wird ein Schnitt bezeichnet, dessen Schnittebene die Ringachse beinhaltet. Abmessungen (Positionen) werden jeweils mit einem der Adjektive radial bzw. axial versehen, um klar zu machen in welche Richtung gemessen wird (positioniert) wird.

### Kurze Beschreibung der Zeichnung

Im Folgenden werden beispielhafte Ausführungsformen der Erfindung unter Bezug auf die Figuren genauer beschrieben, wobei
Fig. 1 einen beispielhaften axialen Schnitt einer beispielhaften Ausführungsform eines nicht erfindungsgemäßen zweiteiligen Ölabstreifrings mit brennraumseitiger Anordnung des Abstreifsteges und L-förmigem Stabilisierungselement zeigt;
Fig. 2 einen beispielhaften axialen Schnitt einer Ausführungsform eines nicht erfindungsgemäßen zweiteiligen Ölabstreifrings mit kurbelgehäuseseitiger Anordnung des Abstreifsteges und rechteckigem Stabilisierungselement zeigt;
Fig. 3 unterschiedliche in Umfangrichtung genommene axiale Schnitte eines erfindungsgemäßen Ölabstreifrings mit jeweils unterschiedlicher axialer Position des Abstreifstegs zeigt;
Fig. 4 unterschiedliche in Umfangrichtung genommene axiale Schnitte eines erfindungsgemäßen Ölabstreifrings mit jeweils unterschiedlicher axialer Länge des Laufflächenschenkels zeigt; und
Fig. 5 unterschiedliche in Umfangrichtung genommene axiale Schnitte eines erfindungsgemäßen Ölabstreifrings mit jeweils unterschiedlichem Vortwist zeigt.

### Ausführliche Beschreibung der Erfindung

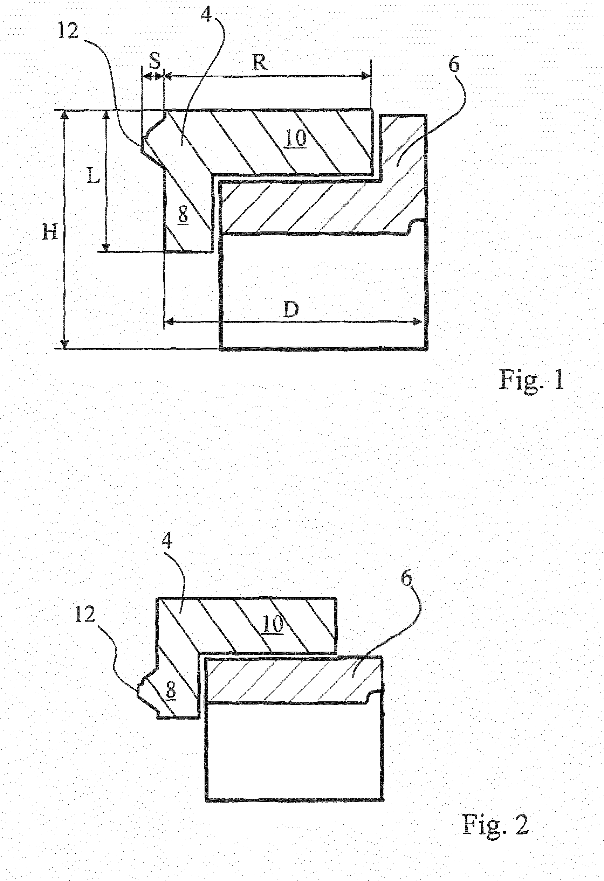

In Fig. 1 ist in einem axialen Schnitt der prinzipielle Aufbau eines zweiteiligen Ölabstreifrings entsprechend einer beispielhaften Ausführungsform dargestellt. Der Ölabstreifring weist einen im Querschnitt im Wesentlichen L-förmigen Grundkörper 4 und ein axiales Stabilisierungselement 6 auf. Der Grundkörper 4 umfasst einen Laufflächenschenkel 8 und einen Ringflankenschenkel 10, die zusammen die L-Form des Grundkörpers ergeben. Das axiale Stabilisierungselement 6 ist in axialer Richtung elastisch und dient insbesondere dazu den Ringflankenschenkel 10 an eine Flanke einer Kolbenringnut zu drücken. Auf dem Laufflächenschenkel 8 ist radial außenliegend ein Abstreifsteg 12 angeordnet, der nach Einbau an der Zylinderwand anliegt und die eigentliche Abstreiffunktion übernimmt. Grundkörper 4 und axiales Stabilisierungselement 6 weisen eine im Wesentlichen ringförmige Gestalt auf, wobei der Laufflächenschenkel 8 des Grundkörpers 4 radial außenliegend ist.

Das axiale Stabilisierungselement 6 ist bevorzugt als Mäander- oder Schlauchfeder ausgeführt; beispielhaft ist in den Figuren 1-5 ein Schnitt einer Mäanderfeder dargestellt. Bevorzugt ist die axiale Gesamthöhe H des zweiteiligen Ölabstreifrings größer als die axiale Breite der Kolbenringnut, in die der Ölabstreifring eingebaut werden soll. Der Ölabstreifring wird dann an beide Flanken dieser Kolbenringnut gedrückt (der Ringflankenschenkel an eine Flanke, das axiale Stabilisierungselement an die andere Flanke), so dass der Ölabstreifring stabilisiert wird. Weiter bevorzugt weist das axiale Stabilisierungselement 6 einen Umfang auf, der größer ist als der Umfang der Kolbenringnut in welcher der Ölabstreifring verwendet werden soll. D.h. die ungespannte Länge des Stabilisierungselements 6 ist größer als die Länge der Kolbenringnut. Das axiale Stabilisierungselement 6 drückt dann, zusätzlich zu der axialen Stabilisierung des Ölabstreifrings in der Kolbenringnut, den Grundkörper 4 radial nach außen, wodurch der Anpressdruck des Abstreifsteges 12 an die Zylinderwand erhöht wird.

Der Ölabstreifring wird bevorzugt so eingebaut, dass sich der Ringflankenschenkel auf der Brennraumseite befindet, welche in den Figuren jeweils die obere Seite ist. Bei dieser Orientierung wird bei der Abwärtsbewegung des Kolbens durch die aufgrund der Reibung des Ölrings an der Zylinderwand entstehende Kraft der Ringflankensteg zusätzlich an die brennraumseitige Nutflanke gedrückt, und so verhindert, dass Öl über die Nut auf die Brennrauseite gelangt. Im Prinzip ist es jedoch auch möglich, den Ölring mit umgekehrter Orientierung zu verwenden, in diesem Fall sind die Orientierungsangaben brennraumseitig bzw. kurbelgehäuseseitig sinngemäß zu verstehen.

Die Form des Abstreifstegs entspricht einem Abstreifsteg, wie er bei Dachfasen-, Gleichfasen- oder LKZ-Ringen Verwendung findet. Letztere weisen eine Lauffläche mit konischen und zylindrischen Anteilen auf.

Im Gegensatz zu üblichen, zwei- bzw. dreiteiligen, Ölabstreifringen ist nur ein Abstreifsteg vorhanden, dadurch wird in Kombination mit dem starken Twist aufgrund der L-Form ein kontinuierlicher Kontakt zwischen Abstreifsteg 12 und Zylinderwand in Umfangrichtung gewährleistet. Weiter wird, da nur ein Abstreifsteg vorhanden ist, der hydrodynamische Reibungsanteil unter gleichen Randbedingungen nahezu halbiert. Darüber hinaus können deutlich schwächere Federn verwendet werden, um den gleichen Anpressdruck und somit die gleiche Abstreifwirkung am Steg zu erzielen.

Die Querschnittsstörung des Grundkörpers 4 aufgrund seiner L-Form führt im eingebauten Zustand, d.h. wenn eine Kraft radial nach innen auf den Grundkörper einwirkt, zu einem "Twist", d.h. zu einem Kippen, des Grundkörpers. Der Grundkörper versucht sozusagen der Kraft auszuweichen indem er sich im axialen Schnitt etwas dreht. Dieses Verhalten wird auch als "twisten" bezeichnet. Dieser Twist kann durch entsprechende Auslegung genutzt werden, um den kontinuierlichen Kontakt zwischen Abstreifsteg und Zylinderwand in Umfangrichtung weiter zu verbessern.

Der Abstreifsteg 12 ist in Fig. 1 am brennraumseitigen Ende des Laufflächenschenkels 8 angeordnet, also als Verlängerung des Ringflankenschenkels 10, dadurch fallen die Querschnittsstörungen kleiner als bei einer Anordnung des Abstreifstegs an einer anderen axialen Position am Laufflächenschenkel aus, was zu einem geringeren Twist führt.

Der auftretende Twist wird insbesondere auch durch die Längen der beiden Schenkel 8, 10 des Grundkörpers 4 bestimmt. Erfindungsgemäß liegt die axiale Länge L des Laufflächenschenkels 8 im Bereich zwischen 15 % und 75 %, bevorzugt zwischen 20 % und 60 %, weiter bevorzugt zwischen 25 % und 45 %, einer axialen Gesamthöhe H des zweiteiligen Ölabstreifrings. Die radiale Länge R des Ringflankenschenkels 10 liegt im Bereich zwischen 20 % und 100 %, bevorzugt zwischen 50 % und 90 %, weiter bevorzugt zwischen 65 % und 85 %, einer radialen Dicke D des zweiteiligen Ölabstreifrings, wobei die radiale Dicke D ohne die radiale Höhe S des Abstreifsteges 12 gemessen wird.

Um die Reibung - und damit den Verschleiß - zwischen L-förmigem Grundkörper 4 und axialem Stabilisierungselement 6 zu verringern, kann die Innenkante, an der die Innenfläche des Laufflächenschenkels 8 auf die Innenfläche Ringflankenschenkels 10 trifft, eine Verrundung oder einen Einzug aufweisen (in der Figur nicht dargestellt).

Die in Fig. 2 dargestellte Ausführungsform entspricht im Wesentlichen der in Fig. 1 dargestellten Ausführungsform. Unterschiedlich sind hier lediglich die axiale Anordnung des Abstreifsteges 12 und die Form des axialen Stabilisierungselements 6. Der Abstreifsteg 12 ist hier am kurbelgehäuseseitigen Ende des Laufflächenschenkels 8 angeordnet. Dies führt zwar zu einem stärkeren Twisten, hat jedoch den Vorteil, dass der Bereich zwischen Zylinderwand und Laufflächenschenkel unterhalb (bzw. kurbelgehäuseseitig) des Abstreifsteges, in den Öl eindringen kann, klein gehalten wird, so dass die durch den Öldruck resultierende Kraft, die den Ölabstreifring von der Zylinderwand wegzudrücken versucht, ebenfalls klein gehalten wird. Durch die offene L-Form des Grundkörpers kann das Öl direkt in die Kolbenringnut und von dort durch geeignete Öffnungen im Kolben in das Kurbelgehäuse geleitet werden. Natürlich ist es möglich, den Abstreifsteg an einer beliebigen axialen Position am Laufflächenschenkel anzuordnen; die in Fig. 1 und Fig. 2 gezeigten Anordnungen sollen lediglich als Beispiel dienen.

Während in Fig. 1 das axiale Stabilisierungselement 6 eine L-Form mit einem "Stützfüßchen" für den Ringflankenschenkel 10 aufweist, ist das axiale Stabilisierungselement 6 in Fig. 2 im Querschnitt rechteckig. Eine L-Form mit "Stützfüßchen" ist bei bekannten dreiteiligen Ölringen notwendig, um die Rails gegen die Zylinderwand zu drücken. Der Ölabstreifring der vorliegenden Erfindung ermöglicht die Kraftübertragung durch die Ringmitte über den Laufflächenschenkel 8; auf ein Stützfüßchen kann also verzichtet werden. Natürlich müssen die beiden Unterschiede zwischen den Figuren nicht in Kombination auftreten, sondern können unabhängig voneinander variiert werden.

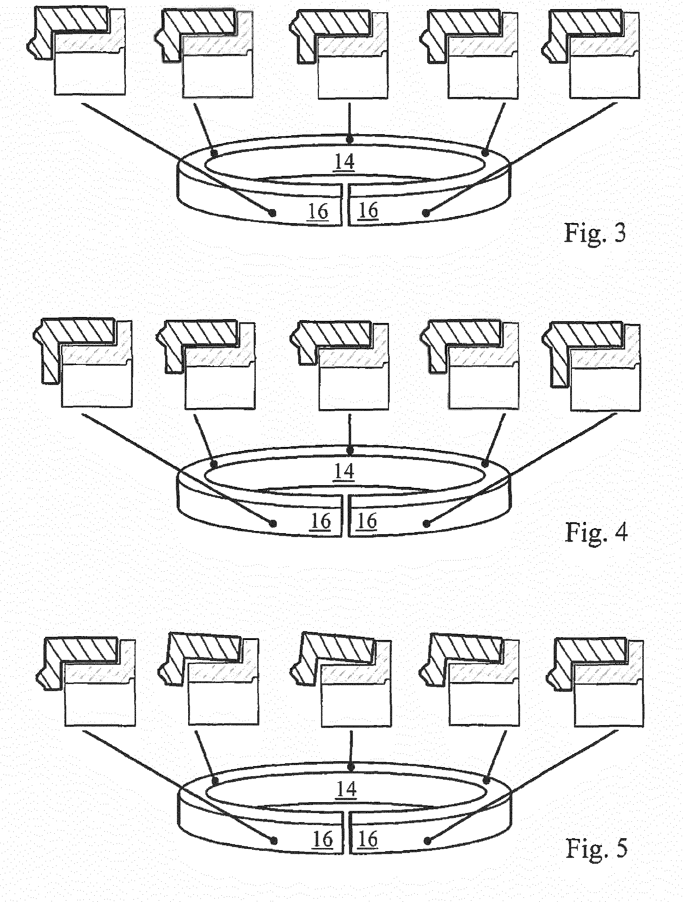

In den Figuren 3 bis 5 werden Ausführungsformen dargestellt, die Merkmale aufweisen, die der Twistneigung, d.h. dem Verwinden des Kolbenrings in der Kolbenringnut, wenn dieser unter Spannung gesetzt wird, entgegengenwirken, wodurch sich das Abstreifverhalten positiv beeinflussen lässt, indem der Anpressdruck an die Zylinderwand in Umfangrichtung beeinflusst wird. Dazu wird jeweils durch Variation eines Merkmales des L-förmigen Grundkörpers in Umfangrichtung die Querschnittsstörung, d.h. die Abweichung von einer zu keiner Verwindung führenden Rechteckform, in Umfangrichtung variiert. Dieses Twistausgleichsdesign erlaubt das Twistverhalten Umfangrichtung zu beeinflussen. Zwar wird in den Figuren jeweils nur ein Merkmal des L-förmigen Grundkörpers variiert, im Rahmen der vorliegenden Erfindung ist es jedoch auch möglich mehrere dieser Merkmale gleichzeitig zu variieren.

In Fig. 3 wird zum Ausgleich des Twists die axiale Position des Abstreifstegs 12, d.h. die Anordnung des Abstreifstegs in axialer Richtung am Laufflächenschenkel, in Umfangrichtung variiert. Bevorzugt befindet sich der Abstreifsteg 12 an den Stoßenden 16 näher an dem freien (kurbelgehäuseseitigen) Ende des Laufflächenschenkels 8 und ist am Ringrücken 14 weiter von diesem Ende entfernt. D.h. der axiale Abstand zwischen Abstreifsteg 12 und brennraumseitigem Ende des Laufflächenschenkels 8 ist in der Nähe der Stoßenden 16 größer als am Ringrücken 14. Die Querschnittsstörung ist in diesem Ausführungsbeispiel also an den Stoßenden 16 größer als am Ringrücken 14. Da sich jedoch der beim Einbau auftretende Twist am Ringrücken 14 stärker auswirkt als an den Stoßenden 16 führt dies insgesamt (bei entsprechender Auslegung) zu einem in Umfangrichtung im Wesentlichen konstantem Twist und mithin zu einem in Umfangrichtung konstantem Anpressdruck des Abstreifstegs 12 an die Zylinderwand. Ein weiterer Vorteil einer Variation der axialen Position des Abstreifstegs 12 in Umfangrichtung ist, dass dadurch ein Öltransport in Umfangrichtung erreicht wird und somit das Öl in Umfangrichtung verteilt wird, wobei es hier vorteilhaft ist, den Abstreifsteg 12 an den Stoßenden 16 näher am kurbelgehäuseseitigen Ende des Laufflächenschenkels 8 anzuordnen, da so Öl vom Ringstoß weggeleitet wird und nicht durch diesen hindurch auf die Brennrauseite gelangen kann. Es ist natürlich auch eine andere als die in Fig. 3 gezeigte Variation der axialen Position des Abstreifstegs in Umfangrichtung möglich.

In Fig. 4 wird zum Ausgleich des Twists die Länge L Laufflächenschenkels in Umfangrichtung variiert. Ähnlich wie in Fig. 3 ist auch hier die Querschnittsstörung an den Stoßenden 16 größer als am Ringrücken 14, da die Laufflächenschenkellänge L an den Stoßenden 16 größer als am Ringrücken 14 ist. Somit ist auch in diesem Ausführungsbeispiel ein Ausgleich des am Ringrücken stärker auftretenden Twists möglich.

In Fig. 5 sind Aspekte weiterer beispielhafter Ausführungsformen des zweiteiligen Kolbenrings dargestellt. Hier ist der Grundkörper 4 vorgetwistet, um das Problem des beim Einbau auftretenden Twists zu überwinden. Durch eine vorgegebene innere Verwindung wird einer unerwünschten Verwindung im Betrieb entgegengewirkt, indem der vorgegebene Twist, also der "Vortwist", des Grundkörpers im nicht eingebauten, also nicht gespannten, Zustand so ausgelegt wird, dass der Twist, der auftritt wenn der Kolbenring eingebaut ist, also unter Spannung steht, kompensiert wird.

Da sich der beim Einbau auftretende Twist am Ringrücken 14 stärker auswirkt als an den Stoßenden 16, kann der Grundkörper 4 des zweiteiligen Kolbenrings weiterhin in Umfangsrichtung unterschiedlich vorgetwistet sein, wobei bevorzugt der Twist am Ringrücken 14 stärker ausgeführt ist als an den Stoßenden 16. Dadurch kann - bei entsprechender Gestaltung - ein in Umlaufrichtung konstanter Anpressdruck des Abstreifstegs 12 an die Zylinderwand erreicht werden. Um einem etwaigen Ringflattern vorzubeugen ist weiter denkbar den Grundkörper 4 im Bereich der Stoßenden 16 stärker vorzutwisten, so dass dort der Anpressdruck größer als beim Rest des Kolbenringes ist, bzw. zumindest größer als in den Bereichen, die zwischen den Stoßenden und dem Ringrücken liegen. Zusammengenommen führen diese beiden Gestaltungsmöglichkeiten dazu, dass der Grundkörper 4 sowohl im Bereich des Ringrückens 14 als auch im Bereich der Stoßenden 16 stärker vorgetwistet ist als in den dazwischenliegenden Bereichen. Bei einer solchen Gestaltung befindet sich der Abstreifsteg vorzugweise in der Nähe des kurbelgehäuseseitigen Endes des Laufflächenschenkels. In Fig. 5 ist von diesen Möglichkeiten lediglich diejenige mit einem stärkeren Vortwist am Ringrücken skizziert; die anderen eben beschriebenen Ausführungsformen, und auch ein über den gesamten Umfang konstanter Vortwist, sind ebenso möglich.

Weiter ist es möglich, die radiale Höhe S des Abstreifsteges 12 in Umfangrichtung zu variieren, was auch eine direkte Beeinflussung des Anpressdruckes an die Zylinderwand ermöglicht. Ebenso kann eine Variation der Länge R des Ringflankenschenkels 10 in Umfangrichtung verwendet werden, um eine gezielte Änderung der Querschnittsstörung in Umfangrichtung zu erreichen. Diese beiden Variationsmöglichkeiten sind in den Figuren nicht dargestellt.

Ebenfalls möglich ist eine beliebige Kombination der Variationsmöglichkeiten (Laufflächenschenkellänge L, Ringflankenschenkellänge R, Vortwist, axiale Position des Abstreifstegs, Abstreifsteghöhe S). Beispielsweise ist denkbar, Laufflächenschenkellänge und axiale Position des Abstreifstegs gleichzeitig so zu variieren, dass sich die jeweiligen Effekte auf die Querschnittsstörung (und damit auf den Twist) gegenseitig aufheben, d.h. in Bereichen mit einem längeren Laufflächenschenkel (Vergrößerung der Querschnittstörung) ist der Abstreifsteg näher am Ringflankenschenkel angeordnet (Verkleinerung der Querschnittstörung). Um den stärkeren Twist am Ringrücken auszugleichen, kann der Ring z.B. zusätzlich mit einem Vortwist versehen werden, oder auch die gleichzeitige Variation so abgeändert werden, dass sich die Effekte auf die Querschnittsstörung nicht mehr gegenseitig aufheben. Zusammengefasst kann durch eine entsprechende Auslegung der Twist und damit der Anpressdruck bzw. die Abstreiffunktion in Umfangrichtung gezielt beeinflusst werden.

### Bezugszeichenliste

- 4: Grundkörper
- 6: Axiales Stabilisierungselement
- 8: Laufflächenschenkel
- 10: Ringflankenschenkel
- 12: Abstreifsteg
- 14: Ringrücken
- 16: Stoßenden

- H: axiale Gesamthöhe des zweiteiligen Kolbenrings
- D: radiale Dicke des zweiteiligen Kolbenrings
- L: axiale Länge des Laufflächenschenkels
- R: radiale Länge des Ringflankenschenkels

## Patentansprüche

1. Zweiteiliger Ölabstreifring mit axialer Stabilisierung, umfassend
einen Grundkörper (4) mit einem im Wesentlichen L-förmigen Querschnitt, der einen Laufflächenschenkel (8) und einen Ringflankenschenkel (10) aufweist, die zusammen zwei Schenkel des L-förmigen Querschnitts bilden, und
ein axiales Stabilisierungselement (6), das zumindest teilweise an dem Ringflankenschenkel (10) anliegend angeordnet ist,
wobei außenliegend auf dem Laufflächenschenkel (8) ein Abstreifsteg (12) angeordnet ist, wobei das Stabilisierungselement (6) in Axialrichtung elastisch ist, und
wobei eine axiale Länge (L) des Laufflächenschenkels (8) kleiner als eine axiale Gesamthöhe (H) des zweiteiligen Ölabstreifrings ist,
**dadurch gekennzeichnet, dass** die axiale Länge (L) des Laufflächenschenkels (8) in Umfangrichtung variiert.

2. Zweiteiliger Ölabstreifring gemäß Anspruch 1, wobei die axiale Länge (L) des Laufflächenschenkels (8) im Bereich zwischen 15 % und 75 %, bevorzugt zwischen 20 % und 60 %, weiter bevorzugt zwischen 25 % und 45 %, einer axialen Gesamthöhe (H) des zweiteiligen Ölabstreifrings liegt.

3. Zweiteiliger Ölabstreifring gemäß Anspruch 1, wobei die radiale Länge (R) des Ringflankenschenkels (10) im Bereich zwischen 20 % und 100 %, bevorzugt zwischen 50 % und 90 %, weiter bevorzugt zwischen 65 % und 85 %, einer radialen Dicke (D) des zweiteiligen Ölabstreifrings liegt.

4. Zweiteiliger Ölabstreifring gemäß einem der vorstehenden Ansprüche, wobei die radiale Länge (R) des Ringflankenschenkels (10) in Umfangrichtung variiert.

5. Zweiteiliger Ölabstreifring gemäß einem der vorstehenden Ansprüche, wobei der Abstreifsteg (12) am kurbelgehäuseseitigen Ende des Laufflächenschenkels (8) angeordnet ist.

6. Zweiteiliger Ölabstreifring gemäß einem der Ansprüche 1 bis 5, wobei der Abstreifsteg (12) am brennraumseitigen Ende des Laufflächenschenkels (8) angeordnet ist.

7. Zweiteiliger Ölabstreifring gemäß einem der Ansprüche 1 bis 5, wobei die axiale Position des Abstreifstegs (12) am Laufflächenschenkel (8) in Umfangrichtung variiert.

8. Zweiteiliger Ölabstreifring gemäß einem der vorstehenden Ansprüche, wobei der Grundkörper (4) im nicht eingebauten Zustand einen Twist aufweist.

9. Zweiteiliger Ölabstreifring gemäß Anspruch 8, wobei der Twist des Grundkörpers (4) in Umfangsrichtung variiert, wobei bevorzugt der Twist an dem Ringrücken (14) stärker ausgeführt ist als an den Stoßenden (16).

10. Zweiteiliger Ölabstreifring gemäß einem der vorstehenden Ansprüche, wobei die radiale Höhe (S) des Abstreifsteges (12) in Umfangrichtung variiert.

11. Zweiteiliger Ölabstreifring gemäß einem der vorstehenden Ansprüche, wobei das axiale Stabilisierungselement (6) als Mäanderfeder ausgeführt ist, oder wobei das axiale Stabilisierungselement (6) als L-förmige oder rechteckige Schlauchfeder ausgeführt ist.

12. Zweiteiliger Ölabstreifring gemäß einem der vorstehenden Ansprüche, wobei das axiale Stabilisierungselement (6) eine ungespannte Länge aufweist, die größer ist als eine Länge der Kolbenringnut in der der zweiteilige Ölabstreifring verwendet werden soll.

13. Zweiteiliger Ölabstreifring gemäß einem der vorstehenden Ansprüche, wobei die Innenkante, an der die Innenfläche des Laufflächenschenkels (8) auf die Innenfläche Ringflankenschenkels (10) trifft, eine Verrundung oder einen Einzug aufweist.

14. Zweiteiliger Ölabstreifring gemäß einem der vorstehenden Ansprüche, wobei der nicht eingebaute zweiteilige Kolbenring eine axiale Gesamthöhe (H) aufweist, die größer ist als eine axiale Breite der Kolbenringnut, in der er verwendet werden soll.

## Claims

1. A two-part oil scraper ring comprising axial stabilization, comprising
a base body (4) comprising an essentially L-shaped cross section, which has a bearing surface leg (8) and a ring flank leg (10), which together form two legs of the L-shaped cross section, and
an axial stabilization element (6), which is arranged so as to bear at least partially on the ring flank leg (10),
wherein a scraping web (12) is arranged so as to be located externally on the bearing surface leg (8),
wherein the stabilization element (6) is elastic in the axial direction, and
wherein an axial length (L) of the bearing surface leg (8) is smaller than an overall axial height (H) of the two-part oil scraper ring,
**characterized in that** the axial length (L) of the bearing leg surface (8) varies in circumferential direction.

2. The two-part oil scraper ring according to claim 1, wherein the axial length (L) of the bearing surface leg (8) is in the range of between 15 % and 75 %, preferably between 20 % and 60 %, more preferably between 25 % and 45 %, of an overall axial height (H) of the two-part oil scraper ring.

3. The two-part oil scraper ring according to claim 1, wherein the radial length (R) of the ring flank leg (10) is in the range between 20 % and 100 %, preferably between 50 % and 90 %, more preferably between 65 % and 85 %, of a radial thickness (D) of the two-part oil scraper ring.

4. The two-part oil scraper ring according to one of the preceding claims, wherein the radial length (R) of the ring flank leg (10) varies in circumferential direction.

5. The two-part oil scraper ring according to one of the preceding claims, wherein the scraping web (12) is arranged on the crankcase-side end of the bearing surface leg (8).

6. The two-part oil scraper ring according to one of claims 1 to 5, wherein the scraping web (12) is arranged on the combustion chamber-side end of the bearing surface leg (8).

7. The two-part oil scraper ring according to one of claims 1 to 5, wherein the axial position of the scraping web (12) on the bearing surface leg (8) varies in circumferential direction.

8. The two-part oil scraper ring according to one of the preceding claims, wherein the base body (4) has a twist in the non-installed state.

9. The two-part oil scraper ring according to claim 8, wherein the twist of the base body (4) varies in circumferential direction, wherein the twist is preferably designed to be stronger on the ring back (14) than on the joint ends (16).

10. The two-part oil scraper ring according to one of the preceding claims, wherein the radial height (S) of the scraping web (12) varies in circumferential direction.

11. The two-part oil scraper ring according to one of the preceding claims, wherein the axial stabilization element (6) is designed as meander spring, or wherein the axial stabilization element (6) is designed as L-shaped or rectangular tubular spring.

12. The two-part oil scraper ring according to one of the preceding claims, wherein the axial stabilization element (6) has a free length, which is greater than a length of the piston ring groove, in which the two-part oil scraper ring is to be used.

13. The two-part oil scraper ring according to one of the preceding claims, wherein the inner edge, at which the inner surface of the bearing surface leg (8) strikes the inner surface of the ring flank leg (10), has a rounding or an indent.

14. The two-part oil scraper ring according to one of the preceding claims, wherein the non-installed two-part piston ring has an overall axial height (H), which is greater than an axial width of the piston ring groove, in which it is to be used.

## Revendications

1. Segment racleur d'huile en deux parties à stabilisation axiale, comprenant
un corps de base (4) avec une section transversale sensiblement en I, qui présente un pan de surface de roulement (8) et un pan de flanc de segment (10), qui forment conjointement deux pans de la section transversale en forme de L, et
un élément de stabilisation axial (6), qui est disposé de manière à venir reposer au moins partiellement sur le pan de flanc de segment (10),
dans lequel une lame de raclage (12) est disposée à l'extérieur du pan de surface de roulement (8),
dans lequel l'élément de stabilisation (6) est élastique dans la direction axiale, et
dans lequel une longueur axiale (L) du pan de surface de roulement (8) est inférieur à une hauteur totale axiale (H) du segment racleur d'huile en deux parties,
**caractérisée en ce que** la longueur axiale (L) du pan de surface de roulement (8) varie dans la direction circonférentielle.

2. Segment racleur d'huile en deux parties selon la revendication 1, dans lequel la longueur axiale (L) du pan de surface de roulement (8) est comprise entre 15 % et 75 %, de préférence entre 20 % et 60 %, plus préférablement entre 25 % et 45 %, d'une hauteur axiale globale (H) du segment racleur d'huile en deux parties.

3. Segment racleur d'huile en deux parties selon la revendication 1, dans lequel la longueur radiale (R) du pan de flanc de segment (10) est comprise entre 20 % et 100 %, de préférence entre 50 % et 90 %, plus préférentiellement entre 65 % et 85 %, d'une épaisseur radiale (D) du segment racleur d'huile en deux parties.

4. Segment racleur d'huile en deux parties selon une des revendications précédentes, dans lequel la longueur radiale (R) du pan de flanc de segment (10) varie dans la direction circonférentielle.

5. Segment racleur d'huile en deux parties selon une des revendications précédentes, dans lequel la lame de raclage (12) est agencée sur l'extrémité côté carter du pan de surface de roulement (8).

6. Segment racleur d'huile en deux parties selon une quelconque des revendications 1 à 5, dans lequel la lame de raclage (12) est disposé sur l'extrémité de chambre de combustion du pan de surface de roulement (8) .

7. Segment racleur d'huile en deux parties selon une des revendications 1 à 5, dans lequel la position axiale de la lame de raclage (12) sur le pan de surface de roulement (8) varie dans la direction circonférentielle.

8. Segment racleur d'huile en deux parties selon une des revendications précédentes, dans lequel le corps de base (4) présente une torsion à l'état non monté.

9. Segment racleur d'huile en deux parties selon la revendication 8, dans lequel la torsion du corps de base (4) varie dans la direction circonférentielle, dans lequel la torsion est de préférence plus prononcée sur le dos du segment (14) que sur les extrémités de butée (16).

10. Segment racleur d'huile en deux parties selon une des revendications précédentes, dans lequel la hauteur radiale (S) de la lame de raclage (12) varie dans la direction circonférentielle.

11. Segment racleur d'huile en deux parties selon une quelconque des revendications précédentes, dans lequel l'élément de stabilisation axial (6) est réalisé sous la forme d'un ressort à méandres, ou dans lequel l'élément de stabilisation axiale (6) est conçu comme un ressort flexible en forme de L ou rectangulaire.

12. Segment racleur d'huile en deux parties selon une quelconque des revendications précédentes, dans lequel l'élément de stabilisation axiale (6) présente une longueur libre, qui est supérieure à une longueur de rainure de segment de piston dans laquelle le segment racleur d'huile en deux parties doit être utilisé.

13. Segment racleur d'huile en deux parties selon une des revendications précédentes, dans lequel le bord intérieur, au niveau duquel la surface intérieure du pan de surface de roulement (8) rencontre la surface intérieure du pan de flanc de segment (10) présente un arrondi ou une échancrure.

14. Segment racleur d'huile en deux pièces selon une quelconque des revendications précédentes, dans lequel le segment de piston en deux pièces non installé présente une hauteur axiale globale (H), qui est supérieure à une largeur axiale de la rainure de segment de piston, dans laquelle il doit être utilisé.
